# EUROPEAN PATENT SPECIFICATION

(11) **EP 4 155 577 B1**
(45) Date of publication and mention of the grant of the patent: **14.10.2026**
(21) Application number: 22190020.2
(22) Date of filing: 11.08.2022
(51) Int. Cl.: F16H 1/32, F16H 49/00

(54) **SPEED REDUCER**
DREHZAHLMINDERER
RÉDUCTEUR DE VITESSE

(30) Priority: 24.09.2021 US 202163247967 P; 27.04.2022 US 202217731074
(43) Date of publication of application: 29.03.2023
(73) Proprietor: Delta Electronics, Inc., Taoyuan City 333 (TW)
(72) Inventor: Chung, Chi-Wen, 333 Taoyuan City (TW); Chu, En-Yi, 333 Taoyuan City (TW); Tsao, Ming-Li, 333 Taoyuan City (TW); Tsai, Hsien-Lung, 333 Taoyuan City (TW)
(74) Representative: Uexküll & Stolberg

(56) References cited:
- DE-A1- 102020 104 758
- DE-A1- 102020 134 973
- DE-A1- 3 131 612
- US-A- 3 377 886
- US-A- 3 558 944

## Description

### FIELD OF THE INVENTION

The present invention relates to a speed reducer, and more particularly to a speed reducer comprising an input gear shared by a fixing gear and an output gear.

### BACKGROUND OF THE INVENTION

Generally, a motor is operated at a high speed and a low torque. In other words, it is difficult for the motor to drive a large-sized load. Consequently, for allowing the motor to drive a heavy object, a speed reducer is used for reducing the rotating speed of the motor and increasing the torque.

In order to have a high reduction ratio, the structure of the speed reducer is usually complicated. Therefore, how to effectively improve the utilization of space of the speed reducer, and to maintain a high reduction ratio while reducing the number of the structural elements and the volume of the speed reducer is the focus of the design currently.

The traditional speed reducer usually includes two independent annular input gears so that the speed reducer can achieve a high reduction ratio through the cooperation between the two annular input gears and other components of the speed reducer. However, due to the use of two annular input gears, the traditional speed reducer has the disadvantages of more components, more cost, a larger volume and a poor structural strength.

DE 10 2020 104758 A1 discloses a reduction gear adapted to ensure the tightness of a bearing and reduce wear. A speed reducer includes a second housing, an internal gear member, an external gear meshing with the internal gear member, a second cover movable relative to the second housing rotates and a main bearing which is arranged between the second housing and the second cover. One or both of the second housing and the second cover has a radially protruding projection on an axially outer side of the main bearing. A gap between an inner ring and an outer ring of the main bearing overlaps the projection formed on one or both of the second housing and the second cover is provided as viewed from the axial direction.

DE 10 2020 134973 A1 provides a flexural engagement type gear device capable of suppressing excessive wear of teeth and improving a spring constant. The flexural engagement type gear device includes a wave generator, an external gear flexed and deformed by the wave generator, a first internal gear meshing with the external gear, and a second internal gear arranged side by side with the first internal gear in an axial direction and meshing with the external gear. A section with minimum tooth thickness, in which an extension section of a first section with inwardly decreasing tooth thickness and an extension section of a second section with inwardly decreasing tooth thickness intersect, is at a position offset from the center of a gap between the first internal gear and the second internal gear. In addition, the axial lengths of a second constant tooth thickness straight section and a first constant tooth thickness straight section are different from each other.

DE 31 31 612 A1 describes a precision drive for positioning azimuth and elevation angles of a solar energy collector apparatus which includes a casing mounted for rotation about a vertical shaft. The casing carries a pair of motor driven gear trains. A primary stage reduction gearing of each train comprises a cyclo-gear or a harmonic drive, while the secondary stage includes a mono-planetary gear train having a planet gear mounted to an eccentric carrier. The planet gear teeth simultaneously engage a fixed ring gear and a rotatable ring gear. The output of the primary stage drives the carrier, and the rotatable ring gear provides output rotation. One gear train engages a pinion fixed to the vertical shaft for rotating the casing about the shaft, while the rotatable ring gear of the other gear train engages a horizontal shaft for adjustment of the elevation angle.

Therefore, there is a need of providing an improved speed reducer in order to the overcome the above issues.

### SUMMARY OF THE INVENTION

An object of the present invention provides a speed reducer. Since the speed reducer includes a shared input gear, the speed reducer has the advantages of a high reduction ratio, less components, a smaller volume and a stronger structural strength.

In accordance with an aspect of the present invention, a speed reducer is provided. The speed reducer includes an outer or a central type of input shaft, an input gear, a fixing gear and an output gear. The input shaft comprises an eccentric structure. The input gear is disposed on the eccentric structure of the input shaft, wherein the input gear is rotated with the input shaft and eccentrically rotated about an axle center of the input shaft, wherein the input gear comprises a plurality of first teeth, each of the plurality of first teeth comprises a first contact portion and a second contact portion arranged side by side in an axial direction. The fixing gear is disposed fixedly corresponding to the input gear and forming a first gear pair with the input gear, wherein the fixing gear comprises a plurality of second teeth, and each of the plurality of second teeth is in contact with the corresponding first contact portion of the first tooth. The output gear is disposed corresponding to the input gear and adjacent to the fixing gear and forming a second gear pair with the input gear, wherein the output gear comprises a plurality of third teeth, and each of the plurality of third teeth is in contact with the corresponding second contact portion of the first tooth, wherein while the input gear is rotated with the input shaft, the first teeth are pushed against the corresponding third teeth so that the output gear is correspondingly rotated. A first tooth number difference between the first teeth and the second teeth is different from a second tooth number difference between the first teeth and the third teeth.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic exploded view illustrating a speed reducer according to a first embodiment of the present invention;
FIG. 2 is a schematic cutaway view illustrating the speed reducer according to the first embodiment of the present invention;
FIG. 3 is a cross-sectional view illustrating the speed reducer according to the first embodiment of the present invention;
FIG. 4 is a schematic front view illustrating the speed reducer according to the first embodiment of the present invention;
FIG. 5 is a schematic exploded view illustrating a speed reducer according to a second embodiment of the present invention;
FIG. 6 is a schematic cutaway view illustrating the speed reducer according to the second embodiment of the present invention;
FIG. 7 is a cross-sectional view illustrating a speed reducer according to the second embodiment of the present invention; and
FIG. 8 is a schematic front view illustrating the speed reducer according to the second embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

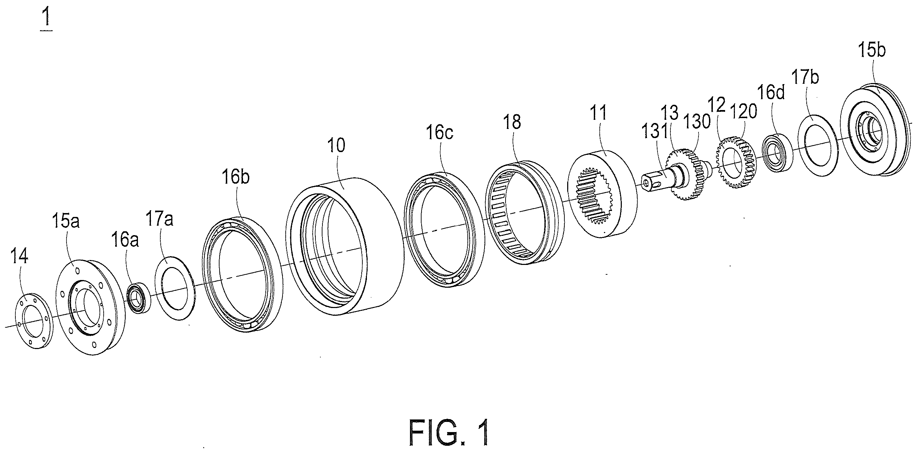

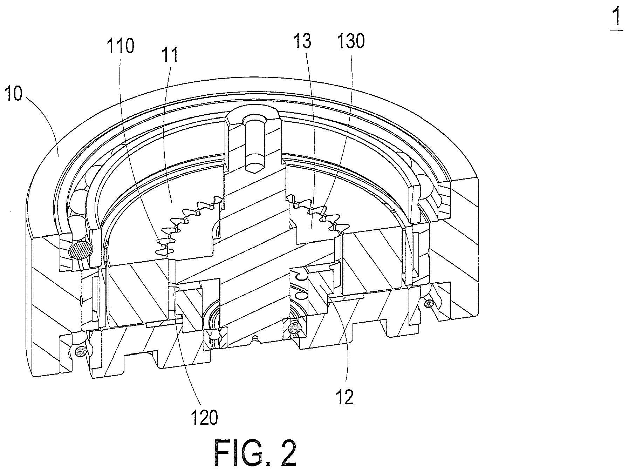

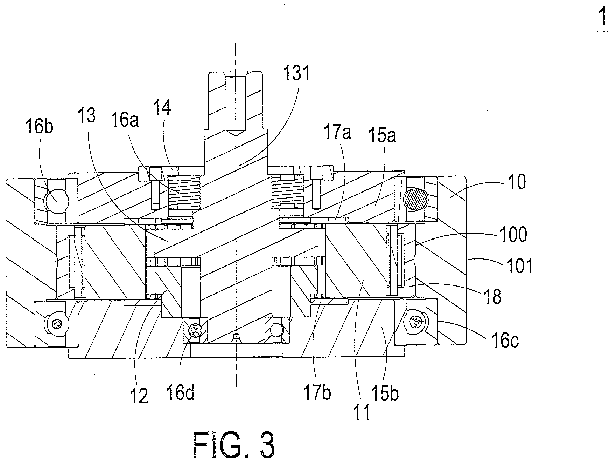

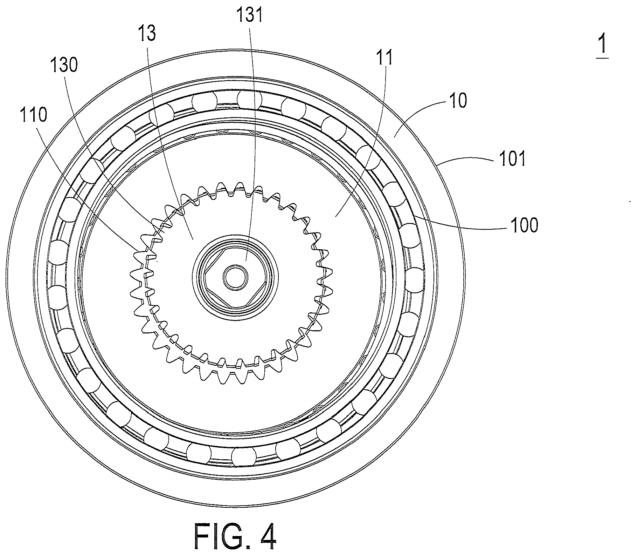

Please refer to FIGS. 1, 2, 3 and 4. FIG. 1 is a schematic exploded view illustrating a speed reducer according to a first embodiment of the present invention. FIG. 2 is a schematic cutaway view illustrating the speed reducer according to the first embodiment of the present invention. FIG. 3 is a cross-sectional view illustrating the speed reducer according to the first embodiment of the present invention. FIG. 4 is a schematic front view illustrating the speed reducer according to the first embodiment of the present invention. In this embodiment, the speed reducer 1 is a two-stage reducer. The speed reducer 1 includes an input shaft 10, an input gear 11, a fixing gear 12 and an output gear 13. The input shaft 10 is outer type defined by inputting manner and located at the outer side of the overall speed reducer 1. As shown in FIGS. 2 and 3, the input shaft 10 is outer type. The input shaft 10 is ring-shaped and has a first hollow structure. The input shaft 10 includes a ring-shaped inner wall 100 and a ring-shaped outer wall 101. The thicknesses between the ring-shaped inner wall 100 and the ring-shaped outer wall 101 are not the same so that an eccentricity is formed between the ring-shaped inner wall 100 and the ring-shaped outer wall 101 of the input shaft 10. That is, the eccentricity exists between the center of the ring-shaped inner wall 100 and the center of the ring-shaped outer wall 101. Moreover, since the center of the ring-shaped inner wall 100 and the center of the ring-shaped outer wall 101 are eccentric, the input shaft 10 includes an eccentric structure formed by the ring-shaped inner wall 100 and the ring-shaped outer wall 101.

The input gear 11 is accommodated within the first hollow structure of the input shaft 10 and disposed on the eccentric structure of the input shaft 10. While the input shaft 10 is rotated, the input gear 11 is rotated with the input shaft 10 and is eccentrically rotated about the center of the ring-shaped outer wall 101 of the input shaft 10. The input gear 11 includes a second hollow structure and a plurality of first teeth 110. Each of the plurality of first teeth 110 is surrounded and protruded from a ring-shaped inner wall of the input gear 11, and each of the plurality of first teeth 110 includes a first contact portion and a second contact portion arranged side by side in an axial direction. As shown in FIGS. 2 and 3, the first teeth 110 are formed as the inner teeth on the ring-shaped inner wall of the input gear 11 corresponding to the input shaft 10 which is outer type.

The fixing gear 12 is disposed corresponding to the input gear 11. Moreover, the fixing gear 12 is accommodated within the second hollow structure of the input gear 11 and disposed on the ring-shaped inner wall of the input gear 11. The fixing gear 12 is fixed and not rotatable. The fixing gear 12 includes a plurality of second teeth 120. Each of the plurality of second teeth 120 is surrounded and protruded from an outer periphery of the fixing gear 12 towarding to the input gear 11 and in contact with the corresponding first contact portion of the first tooth 110. Besides, the fixing gear 12 forms a first gear pair with the input gear 11.

The output gear 13 is disposed corresponding to the input gear 11 and adjacent to the fixing gear 12. Moreover, the output gear 13 is accommodated within the second hollow structure of the input gear 11 and disposed on the ring-shaped inner wall of the input gear 11. The output gear 13 includes a plurality of third teeth 130. Each of the plurality of third teeth 130 is surrounded and protruded from an outer periphery of the output gear 13 towarding to the input gear 11 and in contact with the corresponding second contact portion of the first tooth 110. While the input gear 11 is rotated with the input shaft 10, the first teeth 110 are pushed against the corresponding third teeth 130. Consequently, the output gear 13 is correspondingly rotated. Besides, the output gear 13 forms a second gear pair with the input gear 11. Moreover, there is a first tooth number difference formed between the first teeth 110 and the second teeth 120. There is a second tooth number difference formed between the first teeth 110 and the third teeth 130. The first tooth number difference is different from the second tooth number difference.

In accordance with the present invention, the fixing gear 12 and the output gear 13 of the speed reducer 1 share with the single input gear 11. Consequently, compared with the traditional speed reducer with two independent annular input gears, the speed reducer 1 not only has the high reduction ratio, but also has the advantages of less components, lower cost, a smaller volume and a stronger structural strength due to the use of the shared single input gear 11. Besides, the speed reducer 1 can avoid the problem about complicated machining the inner teeth since the use of the shared single input gear 11. Moreover, since the speed reducer 1 includes the fixing gear 12, so that the input gear 11 of the speed reducer 1 does not require the design of fixing holes or indexing holes as the traditional speed reducer. Consequently, the volume along a radial direction of the speed reducer 1 is reduced.

In this embodiment, the input shaft 10 is a power input terminal of the speed reducer 1, wherein a rotation speed of the input shaft 10 is defined as an input speed of the speed reducer 1. The output gear 13 is a power output terminal of the speed reducer 1, wherein a rotation speed of the output gear 13 is defined as an output speed of the speed reducer 1. Besides, the reduction ratio of the speed reducer 1 is equal to a ratio calculated by dividing the number of teeth on the larger gear by the number of teeth on the smaller gear, and can be expressed as the following formulas: ${S}_{out} = {S}_{in} \times \frac{\left(TC2-TB1\right) \times \left(TB1-TA1\right)}{TB 1 \times TC 1} ;$ Wherein $TA 1 = \frac{TA}{TCA} , TB 1 = \frac{TB}{TCB} , TC 1 = \frac{TC}{TCA} , TC 2 = \frac{TC}{TCB} ;$ Wherein *Sₒᵤₜ* is the output speed of the speed reducer 1, *Sᵢₙ* is the input speed of the speed reducer 1, *TA* is the number of the second teeth 120, *TB* is the number of the third teeth 130, *TC* is the number of the first teeth 110, *TCA* is the first tooth number difference and *TCB* is the second tooth number difference. The tooth number difference of any two of the first teeth 110, the second teeth 120 and the third teeth 130 is one to two teeth. For example, the number of the first tooth number difference is one tooth, and the number of the second tooth number difference is two teeth.

In case that the number of the second teeth 120 *(TA)* is 31 teeth, the number of the third teeth 130 *(TB)* is 30 teeth and the number of the first teeth 110 *(TC)* is 32 teeth, according to the above formula, TA1=31/1=31, TB1 =30/2=15, TC1=32/1=32, TC2=32/2=16. Therefore, ${S}_{out} = {S}_{in} \times \frac{\left(16-15\right) \times \left(15-31\right)}{15 \times 32} = {S}_{in} \times \frac{- 1}{30}$ , wherein the negative sign indicates that the input shaft 10 and the output gear 13 rotate in opposite directions.

In some embodiments, the tooth number difference of any two of the first teeth 110, the second teeth 120 and the third teeth 130 is two to four teeth. For example, the number of the first tooth number difference is two teeth, and the number of the second tooth number difference is four teeth. Therefore, in case that the number of the second teeth 120 *(TA)* is 70 teeth, the number of the third teeth 130 *(TB)* is 68 teeth and the number of the first teeth 110 *(TC)* is 72 teeth, the number of the first tooth number difference is two teeth, and the number of the second tooth number difference is four teeth, and according to the above formula, TA1 =70/2=35, TB1 =68/4=17, TC1=72/2=36, TC2=72/4=18. Therefore, ${S}_{out} = {S}_{in} \times \frac{\left(18-17\right) \times \left(17-35\right)}{17 \times 36} = {S}_{in} \times \frac{- 1}{34}$ , wherein the negative sign indicates that the input shaft 10 and the output gear 13 rotate in opposite directions.

In some embodiments, the output gear 13 further includes an output shaft 131 extending from a center of the output gear 13 to the two opposite outer sides. While the output gear 13 is rotated, the output shaft 131 is rotated with the output gear 13.

In some embodiments, the speed reducer 1 further includes a cover 14, a first fixing base 15a, a first ball bearing 16a, a first washer 17a, a second ball bearing 16b, a third ball bearing 16c, a needle bearing 18, a fourth ball bearing 16d, a second washer 17b and a second fixing base 15b. The first fixing base 15a and the second fixing base 15b are located at the opposite outer sides of the speed reducer 1 in the axial direction, wherein the fixing gear 12 is fixedly connected with the second fixing base 15b. The first fixing base 15a includes a third hollow structure, and the second fixing base 15b includes a fourth hollow structure. One part of the output shaft 131 is penetrated through the third hollow structure of the first fixing base 15a, and another part of the output shaft 131 is penetrated through the fourth hollow structure of the second fixing base 15b. The cover 14 is disposed on the outer surface of the first fixing base 15a to cover one side of the third hollow structure. The first ball bearing 16a is disposed in the third hollow structure of the first fixing base 15a and arranged between the first fixing base 15a and the output shaft 131. The fourth ball bearing 16d is disposed in the fourth hollow structure of the second fixing base 15b and arranged between the second fixing base 15b and the output shaft 131. The output shaft 131 is rotatable within the third hollow structure of the first fixing base 15a and the fourth hollow structure of the second fixing base 15b through the first ball bearing 16a and the fourth ball bearing 16d. The second ball bearing 16b is disposed in the first hollow structure of the input shaft 10 and arranged between the first fixing base 15a and the input shaft 10. The third ball bearing 16c is disposed in the first hollow structure of the input shaft 10 and arranged between the second fixing base 15b and the input shaft 10. The first washer 17a is disposed between the first fixing base 15a and the input gear 11. The second washer 17b is disposed between the second fixing base 15b and the input gear 11. The needle bearing 18 is disposed in the first hollow structure of the input shaft 10 and arranged between the input gear 11 and the input shaft 10. The input shaft 10 is rotatable through the second ball bearing 16b, the third ball bearing 16c and the needle bearing 18.

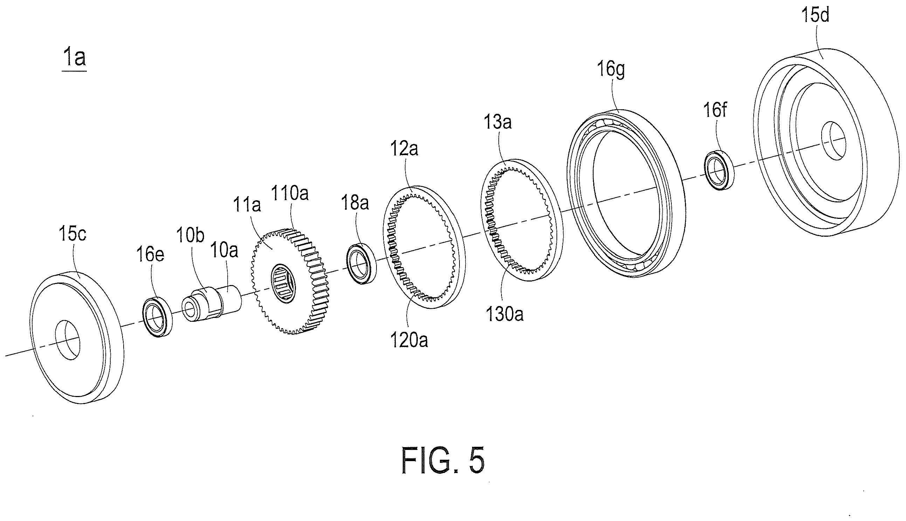

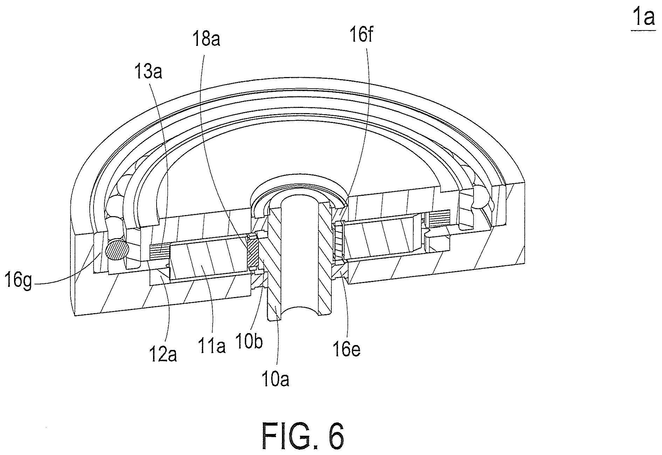

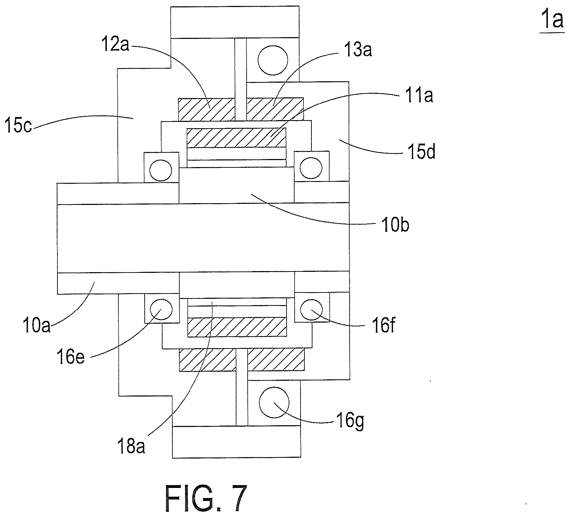

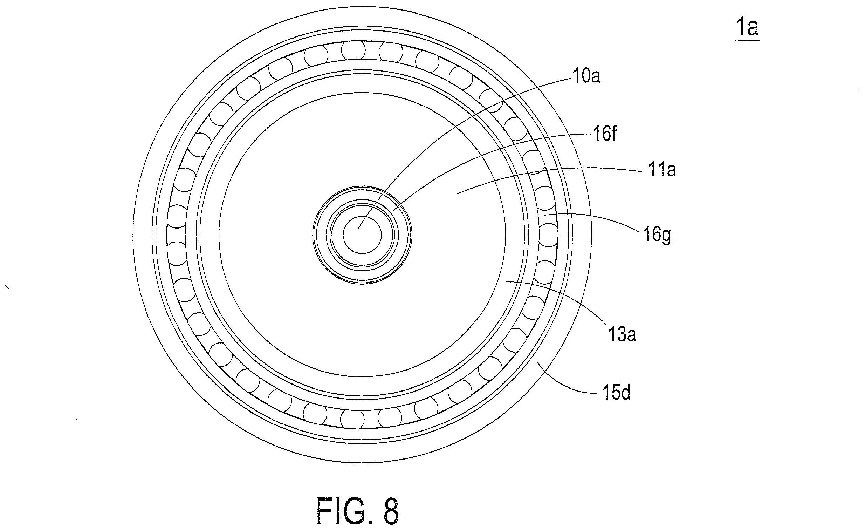

Please refer to FIGs. 5, 6, 7 and 8. FIG. 5 is a schematic exploded view illustrating a speed reducer according to a second embodiment of the present invention. FIG. 6 is a schematic cutaway view illustrating the speed reducer according to the second embodiment of the present invention. FIG. 7 is a cross-sectional view illustrating a speed reducer according to a second embodiment of the present invention. FIG. 8 is a schematic front view illustrating the speed reducer according to the second embodiment of the present invention. Since the structure and the operation of the speed reducer 1a of this embodiment are similar to those of the first embodiment, the following description only uses the cross-sectional view shown in FIG. 5 to explain the speed reducer 1a. The speed reducer 1a is a two-stage reducer. The speed reducer 1a includes an input shaft 10a, an input gear 11a, a fixing gear 12a and an output gear 13a. The input shaft 10a is central type defined by inputting manner and located at a center of the overall speed reducer 1a. The input shaft 10a includes an eccentric structure 10b. The eccentric structure 10b is eccentrically fixed on the input shaft 10a. While the input shaft 10a is rotated, the eccentric structure 10b is rotated with the input shaft 10a and eccentrically rotated about the axle center of the input shaft 10a.

The input gear 11a includes a first hollow structure, a ring-shaped inner wall, a ring-shaped outer wall and a plurality of first teeth 110a. The eccentric structure 10b is disposed in the first hollow structure. Consequently, while the eccentric structure 10b is rotated with the input shaft 10a, the input gear 11a is rotated with the eccentric structure 10b. The plurality of first teeth 110a are surrounded and protruded from the ring-shaped outer wall of the input gear 11a, and each of the plurality of first teeth 110a includes a first contact portion and a second contact portion arranged side by side in an axial direction. Besides, the first teeth 110a are formed as the outer teeth on the ring-shaped outer wall of the input gear 11a corresponding to the input shaft 10a which is central type.

The fixing gear 12a is disposed corresponding to the input gear 11a and includes a second hollow structure. Moreover, the fixing gear 12a is disposed on the ring-shaped outer wall of the input gear 11a so that one part of the input gear 11a is accommodated within the second hollow structure of the fixing gear 12a. The fixing gear 12a is fixed and not rotatable. The fixing gear 12a includes a plurality of second teeth 120a. Each of the plurality of second teeth 120a is surrounded and protruded from an inner periphery of the fixing gear 12a towarding to the input gear 11a and in contact with the corresponding first contact portion of the first tooth 110a. Besides, the fixing gear 12a forms a first gear pair with the input gear 11a.

The output gear 13a is disposed corresponding to the input gear 11a and adjacent to the fixing gear 12a, and the output gear 13a includes a third hollow structure. Moreover, the output gear 13a is disposed on the ring-shaped outer wall of the input gear 11a so that another part of the input gear 11a is accommodated within the third hollow structure of the output gear 13a. The output gear 13a includes a plurality of third teeth 130a. Each of the plurality of third teeth 130a is surrounded and protruded from an inner periphery of the output gear 13a towarding to the input gear 11a and in contact with the corresponding second contact portion of the first tooth 110a. While the input gear 11a is rotated with the input shaft 10a, the first teeth 110a are pushed against the corresponding third teeth 130a. Consequently, the output gear 13a is correspondingly rotated. Besides, the output gear 13a forms a second gear pair with the input gear 11a. Moreover, there is a first tooth number difference formed between the first teeth 110a and the second teeth 120a. There is a second tooth number difference formed between the first teeth 110a and the third teeth 130a. The first tooth number difference is different from the second tooth number difference.

In accordance with the present invention, the fixing gear 12a and the output gear 13a of the speed reducer 1a share with the single input gear 11a. Consequently, compared with the traditional speed reducer with two independent annular gears, the speed reducer 1a not only has the high reduction ratio, but also has the advantages of less components, lower cost, a smaller volume and a stronger structural strength due to the use of the shared single input gear 11a. Besides, since the speed reducer 1a includes the fixing gear 12a and the input gear 13a, the speed reducer 1a does not require the design of fixing holes or indexing holes as the traditional speed reducer. Consequently, the volume along a radial direction of the speed reducer 1a is reduced.

In this embodiment, the input shaft 10a is a power input terminal of the speed reducer 1a, and the output gear 13a is a power output terminal of the speed reducer 1a. Wherein a rotation speed of the input shaft 10a is defined as an input speed of the speed reducer 1a, and a rotation speed of the output gear 13a is defined as an output speed of the speed reducer 1a. Besides, the reduction ratio of the speed reducer 1 is equal to the following formula: ${S}_{out} = {S}_{in} \times \frac{\left(TA1-TC1\right) \times \left(TC1-TC2\right)}{TC 1 \times TB 1} ;$ $TA 1 = \frac{TA}{TCA} , TB 1 = \frac{TB}{TCB} , TC 1 = \frac{TC}{TCA} , TC 2 = \frac{TC}{TCB} ;$ Wherein *Sₒᵤₜ* is the output speed of the speed reducer 1a, *Sᵢₙ* is the input speed of the speed reducer 1a, *TA* is the number of the second teeth 120a, *TB* is the number of the third teeth 130a, *TC* is the number of the first teeth 110a, *TCA* is the first tooth number difference, and *TCB* is the second tooth number difference. The tooth number difference of any two of the first teeth 110a, the second teeth 120a and the third teeth 130a is one to two teeth. For example, the number of the first tooth number difference is one tooth, and the number of the second tooth number difference is two teeth.

In case that the number of the second teeth 120a (*TA*) is 31 teeth, the number of the third teeth 130a (*TB*) is 32 teeth and the number of the first teeth 110a ( *TC* ) is 30 teeth, according to the above formula, TA1=31/1=31, TB1=32/2=16, TC1=30/1=30, TC2=30/2=15. Therefore, ${S}_{out} = {S}_{in} \times \frac{\left(31-30\right) \times \left(30-15\right)}{30 \times 16} = {S}_{in} \times \frac{1}{32} .$

In some embodiments, the tooth number difference of any two of the first teeth 110a, the second teeth 120a and the third teeth 130a is two to four teeth. For example, the number of the first tooth number difference is two teeth, and the number of the second tooth number difference is four teeth. Therefore, in case that the number of the second teeth 120a (*TA*) is 68 teeth, the number of the third teeth 130a (*TB*) is 70 teeth and the number of the first teeth 130a (*TC*) is 72 teeth, according to the above formula, TA1=68/4=17, TB1=70/2=35, TC1=72/4=18, TC2=72/2=36. Therefore, ${S}_{out} = {S}_{in} \times \frac{\left(17-18\right) \times \left(18-36\right)}{18 \times 35} = {S}_{in} \times \frac{1}{35} .$

In some embodiments, the speed reducer 1a further includes a fixing base 15c, a first ball bearing 16e, a second ball bearing 16f, a third ball bearing 16g, a needle bearing 18a and an output disc 15d. The fixing base 15c and the output disc 15d are located at the opposite outer sides of the speed reducer 1a in the axial direction, wherein the fixing gear 12a is fixedly connected with the fixing base 15c, and the output gear 13a is connected with the output disc 15d. While the output gear 13a is rotated, the output disc 15d is rotated with the output gear 13a. The fixing base 15c includes a fourth hollow structure, and the output disc 15d includes a fifth hollow structure. One part of the input shaft 10a is penetrated through the fourth hollow structure of the fixing base 15c, and another part of the input shaft 10a is penetrated through the fifth hollow structure of the output disc 15d. The first ball bearing 16e is disposed in the fourth hollow structure of the fixing base 15c and arranged between the fixing base 15c and the input shaft 10a. The second ball bearing 16f is disposed in the fifth hollow structure of the output disc 15d and arranged between the output disc 15d and the input shaft 10a. The input shaft 10a is rotatable within the fourth hollow structure of the fixing base 15c and the fifth hollow structure of the output disc 15d through the first ball bearing 16e and the second ball bearing 16f. The third ball bearing 16g is arranged between the fixing base 15c and the output disc 15d. The output disc 15d is rotatable through the third ball bearing 16g. The needle bearing 18a is disposed in the first hollow structure of the input gear 11a and arranged between the input gear 11a and the eccentric structure 10b. The input gear 11a is rotatable through the needle bearing 18a.

## Claims

1. A speed reducer (1), comprising:
an input shaft (10) which is an outer input shaft, wherein the input shaft (10) comprises an eccentric structure;
an input gear (11) disposed on the eccentric structure of the input shaft (10), wherein the input gear (11) is rotated with the input shaft (10) and eccentrically rotated about an axle center of the input shaft (10), wherein the input gear (11) comprises a plurality of first teeth (110), each of the plurality of first teeth (110) comprises a first contact portion and a second contact portion arranged side by side in an axial direction;
a fixing gear (12) disposed fixedly corresponding to the input gear (11) and forming a first gear pair with the input gear (11), wherein the fixing gear (12) comprises a plurality of second teeth (120), and each of the plurality of second teeth (120) is in contact with the corresponding first contact portion of the first tooth (110); and
an output gear (13) disposed corresponding to the input gear (11) and adjacent to the fixing gear (12) and forming a second gear pair with the input gear (11), wherein the output gear (13) comprises a plurality of third teeth (130), and each of the plurality of third teeth (130) is in contact with the corresponding second contact portion of the first tooth (110, 110a), wherein while the input gear (11) is rotated with the input shaft (10, 10a), the first teeth (110) are pushed against the corresponding third teeth (130, 130a), so that the output gear (13) is correspondingly rotated;
a first tooth number difference between the first teeth (110) and the second teeth (120) is different from a second tooth number difference between the first teeth (110) and the third teeth (130);
**characterized in that** the plurality of first teeth (110) are formed as the inner teeth, wherein a reduction ratio of the speed reducer (1) is equal to the following formula: ${S}_{out} = {S}_{in} \times \frac{\left(TC2-TB1\right) \times \left(TB1-TA1\right)}{TB 1 \times TC 1} ;$ wherein $TA 1 = \frac{TA}{TCA} , TB 1 = \frac{TB}{TCB} , TC 1 = \frac{TC}{TCA} , TC 2 = \frac{TC}{TCB} ;$
wherein *Sₒᵤₜ* is an output speed of the speed reducer (1), *Sᵢₙ* is an input speed of the speed reducer (1), *TA* is a number of the second teeth (120), *TB* is a number of the third teeth (130), *TC* is a number of the first teeth (110), *TCA* is the first tooth number difference and *TCB* is the second tooth number difference;
wherein the input shaft (10) comprises a ring-shaped inner wall (100) and a ring-shaped outer wall (101), wherein an eccentricity is formed between the ring-shaped inner wall (100) and the ring-shaped outer wall (101), so that forms the eccentric structure, and wherein the input gear (11) is accommodated within the input shaft (10), wherein each of the plurality of first teeth (110) is surrounded and protruded from a ring-shaped inner wall of the input gear (11).

2. The speed reducer (1) according to claim 1, wherein the fixing gear (12) is accommodated within the input gear (11) and disposed on the ring-shaped inner wall of the input gear (11), wherein each of the plurality of second teeth (120) is surrounded and protruded from an outer periphery of the fixing gear (12).

3. The speed reducer (1) according to claim 2, wherein the output gear (13) is accommodated within the input gear (11) and disposed on the ring-shaped inner wall of the input gear (11), wherein each of the plurality of third teeth (130) is surrounded and protruded from an outer periphery of the output gear (13).

4. A speed reducer (1a), comprising:
an input shaft which is a central input shaft (10a), wherein the input shaft (10a) comprises an eccentric structure (10b);
an input gear (11a) disposed on the eccentric structure (10b) of the input shaft (10a), wherein the input gear (11a) is rotated with the input shaft (10a) and eccentrically rotated about an axle center of the input shaft (10a), wherein the input gear (11a) comprises a plurality of first teeth (110a), each of the plurality of first teeth (110a) comprises a first contact portion and a second contact portion arranged side by side in an axial direction;
a fixing gear (12a) disposed fixedly corresponding to the input gear (11a) and forming a first gear pair with the input gear (11a), wherein the fixing gear (12a) comprises a plurality of second teeth (120a), and each of the plurality of second teeth (120a) is in contact with the corresponding first contact portion of the first tooth (110a); and
an output gear (13a) disposed corresponding to the input gear (11a) and adjacent to the fixing gear (12a) and forming a second gear pair with the input gear (11a), wherein the output gear (13a) comprises a plurality of third teeth (130a), and each of the plurality of third teeth (130a) is in contact with the corresponding second contact portion of the first tooth (110a), wherein while the input gear (11a) is rotated with the input shaft (10a), the first teeth (110a) are pushed against the corresponding third teeth (130a), so that the output gear (13a) is correspondingly rotated;
a first tooth number difference between the first teeth (110a) and the second teeth (120a) is different from a second tooth number difference between the first teeth (110a) and the third teeth (130a);
**characterized in that** the plurality of first teeth (110a) are formed as the outer teeth, wherein a reduction ratio of the speed reducer (1a) is equal to the following formula: ${S}_{out} = {S}_{in} \times \frac{\left(TA1-TC1\right) \times \left(TC1-TC2\right)}{TC 1 \times TB 1} ;$ wherein $TA 1 = \frac{TA}{TCA} , TB 1 = \frac{TB}{TCB} , TC 1 = \frac{TC}{TCA} , TC 2 = \frac{TC}{TCB} ;$
wherein *Sₒᵤₜ* is an output speed of the speed reducer (1a), *Sᵢₙ* is an input speed of the speed reducer (1a), *TA* is the number of the second teeth (120a), *TB* is the number of the third teeth (130a), *TC* is the number of the first teeth (110a), *TCA* is the first tooth number difference, and *TCB* is the second tooth number difference;
wherein the eccentric structure (10b) is eccentrically fixed on the input shaft (10a), wherein the eccentric structure (10b) is rotated with the input shaft (10a) and eccentrically rotated about the axle center of the input shaft (10a).

5. The speed reducer (1, 1a) according to claim 4, wherein the input gear (11a) comprises a ring-shaped outer wall, wherein the eccentric structure (10b) is disposed within the input gear (11a), and the plurality of first teeth (110a) are surrounded and protruded from the ring-shaped outer wall.

6. The speed reducer (1, 1a) according to claim 5, wherein the fixing gear (12a) is disposed on the ring-shaped outer wall of the input gear (11a), so that the input gear (11a) is accommodated within the fixing gear (12a), wherein each of the plurality of second teeth (120a) is surrounded and protruded from an inner periphery of the fixing gear (12a).

7. The speed reducer (1, 1a) according to claim 6, wherein the output gear (13a) is disposed on the ring-shaped outer wall of the input gear (11a), so that the input gear (11a) is accommodated within the output gear (13a), wherein each of the plurality of third teeth (130a) is surrounded and protruded from an inner periphery of the output gear (13a).

## Patentansprüche

1. Drehzahlminderer (1), umfassend:
eine Eingangswelle (10), die eine äußere Eingangswelle ist, wobei die Eingangswelle (10) eine exzentrische Struktur hat;
ein Eingangszahnrad (11), das an der exzentrischen Struktur der Eingangswelle (10) angeordnet ist, wobei das Eingangszahnrad (11) mit der Eingangswelle (10) rotiert und exzentrisch um ein Achsenzentrum der Eingangswelle (10) rotiert, wobei das Eingangszahnrad (11) eine Mehrzahl von ersten Zähnen (110) aufweist, jeder der Mehrzahl von ersten Zähnen (110) einen ersten Kontaktbereich und einen zweiten Kontaktbereich hat, die in axialer Richtung nebeneinander angeordnet sind;
ein Fixierungszahnrad (12), das entsprechend dem Eingangszahnrad (11) fest angeordnet ist und mit dem Eingangszahnrad (11) ein erstes Zahnradpaar bildet, wobei das Fixierungszahnrad (12) eine Mehrzahl von zweiten Zähnen (120) aufweist, und jeder der Mehrzahl von zweiten Zähnen (120) mit dem entsprechenden ersten Kontaktbereich des ersten Zahns (110) in Kontakt steht; und
ein Ausgangszahnrad (13), das entsprechend dem Eingangszahnrad (11) angeordnet sowie zum Fixierungszahnrad (12) benachbart ist und das mit dem Eingangszahnrad (11) ein zweites Zahnradpaar bildet, wobei das Ausgangszahnrad (13) eine Mehrzahl von dritten Zähnen (130) aufweist, und jeder der Mehrzahl von dritten Zähnen (130) mit dem entsprechenden zweiten Kontaktbereich des ersten Zahns (110, 110a) in Kontakt steht, wobei, während das Eingangszahnrad (11) mit der Eingangswelle (10, 10a) rotiert, die ersten Zähne (110) gegen die entsprechenden dritten Zähne (130, 130a) gedrückt werden, so dass das Ausgangszahnrad (13) entsprechend rotiert;
eine erste Zahnanzahldifferenz zwischen den ersten Zähnen (110) und den zweiten Zähnen (120) verschieden ist von einer zweiten Zahnanzahldifferenz zwischen den ersten Zähnen (110) und den dritten Zähnen (130);
**dadurch gekennzeichnet, dass** die Mehrzahl von ersten Zähnen (110) als innere Zähne ausgebildet sind, wobei ein Untersetzungsverhältnis des Drehzahlminderers (1) der folgenden Formel entspricht: ${S}_{out} = {S}_{in} \times \frac{\left(TC2-TB1\right) \times \left(TB1-TA1\right)}{TB 1 \times TC 1} ;$
wobei $TA 1 = \frac{TA}{TCA} , TB 1 = \frac{TB}{TCB} , TC 1 = \frac{TC}{TCA} , TC 2 = \frac{TC}{TCB} ;$
wobei *Sₒᵤₜ* eine Ausgangsdrehzahl des Drehzahlminderers (1) ist, *Sᵢₙ* eine Eingangsdrehzahl des Drehzahlminderers (1) ist, *TA* eine Anzahl der zweiten Zähne (120) ist, *TB* eine Anzahl der dritten Zähne (130) ist, *TC* eine Anzahl der ersten Zähne (110) ist, *TCA* die erste Zahnanzahldifferenz ist und *TCB* die zweite Zahnanzahldifferenz ist;
wobei die Eingangswelle (10) eine ringförmige Innenwand (100) und eine ringförmige Außenwand (101) hat, wobei eine Exzentrizität zwischen der ringförmigen Innenwand (100) und der ringförmigen Außenwand (101) ausgebildet ist, wodurch die exzentrische Struktur gebildet wird, und wobei das Eingangszahnrad (11) in der Eingangswelle (10) aufgenommen ist, wobei jeder der Mehrzahl von ersten Zähnen (110) eine ringförmige Innenwand des Eingangszahnrads (11) umgibt und von dieser vorsteht.

2. Drehzahlminderer (1) nach Anspruch 1, wobei das Fixierungszahnrad (12) in dem Eingangszahnrad (11) aufgenommen und an der ringförmigen Innenwand des Eingangszahnrads (11) angeordnet ist, wobei jeder der Mehrzahl von zweiten Zähnen (120) einen Außenumfang des Fixierungszahnrads (12) umgibt und von diesem vorsteht.

3. Drehzahlminderer (1) nach Anspruch 2, wobei das Ausgangszahnrad (13) in dem Eingangszahnrad (11) untergebracht und an der ringförmigen Innenwand des Eingangszahnrads (11) angeordnet ist, wobei jeder der Mehrzahl von dritten Zähnen (130) einen Außenumfang des Eingangszahnrads (13) umgibt und von diesem vorsteht.

4. Drehzahlminderer (1a), umfassend:
eine Eingangswelle, die eine zentrale Eingangswelle (10a) ist, wobei die Eingangswelle (10a) eine exzentrische Struktur (10b) hat;
ein Eingangszahnrad (11a), das an der exzentrischen Struktur (10b) der Eingangswelle (10a) angeordnet ist, wobei das Eingangsrad (11a) mit der Eingangswelle (10a) rotiert und exzentrisch um ein Achsenzentrum der Eingangswelle (10a) rotiert, wobei das Eingangszahnrad (11a) eine Mehrzahl von ersten Zähnen (110a) aufweist, jeder der Mehrzahl von ersten Zähne (110a) einen ersten Kontaktbereich und einen zweiten Kontaktbereich hat, die in axialer Richtung nebeneinander angeordnet sind;
ein Fixierungszahnrad (12a), das entsprechend dem Eingangszahnrad (11a) angeordnet ist und mit dem Eingangszahnrad (11a) ein erstes Zahnradpaar bildet, wobei das Fixierungszahnrad (12a) eine Mehrzahl von zweiten Zähnen (120a) aufweist, und jeder der Mehrzahl von zweiten Zähne (120a) mit dem entsprechenden ersten Kontaktbereich des ersten Zahns (110a) in Kontakt steht; und
ein Ausgangszahnrad (13a), das entsprechend dem Eingangszahnrad (11a) angeordnet sowie zum Fixierungszahnrad (12a) benachbart ist und das mit dem Eingangszahnrad (11a) ein zweites Zahnradpaar bildet, wobei das Ausgangszahnrad (13a) eine Mehrzahl von dritten Zähnen (130a) aufweist, und jeder der Mehrzahl von dritten Zähnen (130a) mit dem entsprechenden zweiten Kontaktbereichs des ersten Zahns (110a) in Kontakt steht, wobei, während das Eingangszahnrad (11a) mit der Eingangswelle (10a) rotiert, die ersten Zähne (110a) gegen die entsprechenden dritten Zähne (130a) gedrückt werden, so dass das Ausgangszahnrad (13a) entsprechend rotiert;
eine erste Zahnanzahldifferenz zwischen den ersten Zähnen (110a) und den zweiten Zähnen (120a) verschieden ist von einer zweiten Zahnanzahldifferenz zwischen den ersten Zähnen (110a) und den dritten Zähnen (130a);
**dadurch gekennzeichnet, dass** die Mehrzahl von ersten Zähnen (110a) als äußere Zähne ausgebildet sind, wobei ein Untersetzungsverhältnis des Drehzahlminderers (1a) der folgenden Formel entspricht: ${S}_{out} = {S}_{in} \times \frac{\left(TA1-TC1\right) \times \left(TC1-TC2\right)}{TC 1 \times TB 1} ;$
wobei $TA 1 = \frac{TA}{TCA} , TB 1 = \frac{TB}{TCB} , TC 1 = \frac{TC}{TCA} , TC 2 = \frac{TC}{TCB} ;$
wobei *Sₒᵤₜ* eine Ausgangsdrehzahl des Drehzahlminderers (1a) ist, *Sᵢₙ* eine Eingangsdrehzahl des Drehzahlminderers (1a) ist, *TA* eine Anzahl der zweiten Zähne (120a) ist, *TB* eine Anzahl der dritten Zähne (130a) ist, *TC* eine Anzahl der ersten Zähne (110a) ist, *TCA* die erste Zahnanzahldifferenz ist und *TCB* die zweite Zahnanzahldifferenz ist;
wobei die exzentrische Struktur (10b) exzentrisch an der Eingangswelle (10a) befestigt ist, wobei die exzentrische Struktur (10b) mit der Eingangswelle (10a) rotiert und exzentrisch um das Achsenzentrum der Eingangswelle (10a) rotiert.

5. Drehzahlminderer (1, 1a) nach Anspruch 4, wobei das Eingangszahnrad (11a) eine ringförmige Außenwand aufweist, wobei die exzentrische Struktur (10b) in dem Eingangszahnrad (11a) angeordnet ist, und die Mehrzahl von ersten Zähnen (110a) die ringförmige Außenwand umgibt und von dieser vorsteht.

6. Drehzahlminderer (1, 1a) nach Anspruch 5, wobei das Fixierungszahnrad (12a) an der ringförmigen Außenwand des Eingangszahnrads (11a) angeordnet ist, so dass das Eingangszahnrad (11a) in dem Fixierungszahnrad (12a) aufgenommen ist, wobei jeder der Mehrzahl von zweiten Zähnen (120a) einen Innenumfang des Fixierungszahnrads (12a) umgibt und von diesem vorsteht.

7. Drehzahlminderer (1, 1a) gemäß Anspruch 6, wobei das Abtriebszahnrad (13a) an der ringförmigen Außenwand des Antriebszahnrads (11a) angeordnet ist, sodass das Eingangsrad (11a) innerhalb des Ausgangsrads (13a) untergebracht ist, wobei jedes der mehreren dritten Zähne (130a) von einem Innenumfang des Ausgangsrads (13a) umgeben ist und aus diesem herausragt.

## Revendications

1. Réducteur de vitesse (1), comprenant:
un arbre d'entrée (10) qui est un arbre d'entrée externe, l'arbre d'entrée (10) comprenant une structure excentrique;
une roue d'entrée (11) disposée sur la structure excentrique de l'arbre d'entrée (10), la roue d'entrée (11) tournant avec l'arbre d'entrée (10) et tournant de manière excentrique autour d'un axe central de l'arbre d'entrée (10), la roue d'entrée (11) comprenant une pluralité de premières dents (110), chaque dent de la pluralité de premières dents (110) comprenant une première portion de contact et une deuxième portion de contact agencées côte à côte dans une direction axiale;
une roue fixe (12) disposée de manière fixe en correspondance avec la roue d'entrée (11) et formant un premier engrenage avec la roue d'entrée (11), la roue fixe (12) comprenant une pluralité de deuxièmes dents (120), et chaque dent de la pluralité de deuxièmes dents (120) étant en contact avec la première portion de contact correspondante d'une première dent (110); et
une roue de sortie (13) disposée en correspondance avec la roue d'entrée (11) et adjacente à la roue fixe (12) et formant un deuxième engrenage avec la roue d'entrée (11), la roue de sortie (13) comprenant une pluralité de troisièmes dents (130), et chaque dent de la pluralité de troisièmes dents (130) étant en contact avec la deuxième portion de contact correspondante d'une première dent (110, 110a), les premières dents (110) étant poussées contre les troisièmes dents (130, 130a) correspondantes pendant que la roue d'entrée (11) tourne avec l'arbre d'entrée (10, 10a), de sorte que la roue de sortie (13) tourne de manière correspondante;
une première différence de nombre de dents entre les premières dents (110) et les deuxièmes dents (120) étant différente d'une deuxième différence de nombre de dents entre les premières dents (110) et les troisièmes dents (130);
**caractérisé en ce que** la pluralité de premières dents (110) sont formées comme étant des dents internes, dans lequel un rapport de réduction du réducteur de vitesse (1) est conforme à la formule suivante: ${S}_{out} = {S}_{in} \times \frac{\left(TC2-TB1\right) \times \left(TB1-TA1\right)}{TB 1 \times TC 1} ;$
avec $TA 1 = \frac{TA}{TCA} , TB 1 = \frac{TB}{TCB} , TC 1 = \frac{TC}{TCA} , TC 2 = \frac{TC}{TCB} ;$
*Sₒᵤₜ* étant une vitesse de sortie du réducteur de vitesse (1), *Sᵢₙ* étant une vitesse d'entrée du réducteur de vitesse (1), *TA* étant le nombre des deuxièmes dents (120), *TB* étant le nombre des troisièmes dents (130), *TC* étant le nombre des premières dents (110), *TCA* étant la première différence de nombre de dents, et *TCB* étant la deuxième différence de nombre de dents;
dans lequel l'arbre d'entrée (10) comprend une paroi interne annulaire (100) et une paroi externe annulaire (101), une excentricité étant formée entre la paroi interne annulaire (100) et la paroi externe annulaire (101), de façon à former la structure excentrique, et la roue d'entrée (11) étant logée à l'intérieur de l'arbre d'entrée (10), chaque dent de la pluralité de premières dents (110) étant entourée et saillante depuis une paroi interne annulaire de la roue d'entrée (11).

2. Réducteur de vitesse (1) selon la revendication 1, dans lequel la roue fixe (12) est logée à l'intérieur de la roue d'entrée (11) et disposée sur la paroi interne annulaire de la roue d'entrée (11), chaque dent de la pluralité de deuxièmes dents (120) étant entourée et saillante depuis une périphérie externe de la roue fixe (12).

3. Réducteur de vitesse (1) selon la revendication 2, dans lequel la roue de sortie (13) est logée à l'intérieur de la roue d'entrée (11) et disposée sur la paroi interne annulaire de la roue d'entrée (11), chaque dent de la pluralité de troisièmes dents (130) étant entourée et saillante depuis une périphérie externe de la roue de sortie (13).

4. Réducteur de vitesse (1a), comprenant:
un arbre d'entrée qui est un arbre d'entrée (10a) central, l'arbre d'entrée (10a) comprenant une structure excentrique (10b);
une roue d'entrée (11a) disposée sur la structure excentrique (10b) de l'arbre d'entrée (10a), la roue d'entrée (11a) tournant avec l'arbre d'entrée (10a) et tournant de manière excentrique autour d'un axe central de l'arbre d'entrée (10a), la roue d'entrée (11a) comprenant une pluralité de premières dents (110a), chaque dent de la pluralité de premières dents (110a) comprenant une première portion de contact et une deuxième portion de contact agencées côte à côte dans une direction axiale;
une roue fixe (12a) disposée de manière fixe en correspondance avec la roue d'entrée (11a) et formant un premier engrenage avec la roue d'entrée (11a), la roue fixe (12a) comprenant une pluralité de deuxièmes dents (120a), et chaque dent de la pluralité de deuxièmes dents (120a) étant en contact avec la première portion de contact correspondante d'une première dent (110a); et
une roue de sortie (13a) disposée en correspondance avec la roue d'entrée (11a) et adjacente à la roue fixe (12a) et formant un deuxième engrenage avec la roue d'entrée (11a), la roue de sortie (13a) comprenant une pluralité de troisièmes dents (130a), et chaque dent de la pluralité de troisièmes dents (130a) étant en contact avec la deuxième portion de contact correspondante d'une première dent (110a), les premières dents (110a) étant poussées contre les troisièmes dents (130a) correspondantes pendant que la roue d'entrée (11a) tourne avec l'arbre d'entrée (10a), de sorte que la roue de sortie (13a) tourne de manière correspondante;
une première différence de nombre de dents entre les premières dents (110a) et les deuxièmes dents (120a) étant différente d'une deuxième différence de nombre de dents entre les premières dents (110a) et les troisièmes dents (130a);
**caractérisé en ce que** la pluralité de premières dents (110a) sont formées comme étant des dents externes, dans lequel un rapport de réduction du réducteur de vitesse (1a) étant conforme à la formule suivante: ${S}_{out} = {S}_{in} \times \frac{\left(TA1-TC1\right) \times \left(TC1-TC2\right)}{TC 1 \times TB 1} ;$
avec $TA 1 = \frac{TA}{TCA} , TB 1 = \frac{TB}{TCB} , TC 1 = \frac{TC}{TCA} , TC 2 = \frac{TC}{TCB} ;$
*Sₒᵤₜ* étant une vitesse de sortie du réducteur de vitesse (1a), *Sᵢₙ* étant une vitesse d'entrée du réducteur de vitesse (1a), *TA* étant le nombre des deuxièmes dents (120a), *TB* étant le nombre des troisièmes dents (130a), *TC* étant le nombre des premières dents (110a), *TCA* étant la première différence de nombre de dents, et *TCB* étant la deuxième différence de nombre de dents;
dans lequel la structure excentrique (10b) est fixée de manière excentrique sur l'arbre d'entrée (10a), la structure excentrique (10b) tournant avec l'arbre d'entrée (10a) et tournant de manière excentrique autour de l'axe central de l'arbre d'entrée (10a).

5. Réducteur de vitesse (1, 1a) selon la revendication 4, dans lequel la roue d'entrée (11a) comprend une paroi externe annulaire, la structure excentrique (10b) étant disposée à l'intérieur de la roue d'entrée (11a), et la pluralité de premières dents (110a) étant entourées et saillantes depuis la paroi externe annulaire.

6. Réducteur de vitesse (1, 1a) selon la revendication 5, dans lequel la roue fixe (12a) est disposée sur la paroi externe annulaire de la roue d'entrée (11a), de sorte que la roue d'entrée (11a) est logée à l'intérieur de la roue fixe (12a), chaque dent de la pluralité de deuxièmes dents (120a) étant entourée et saillante depuis une périphérie interne de la roue fixe (12a).

7. Réducteur de vitesse (1, 1a) selon la revendication 6, dans lequel la roue de sortie (13a) est disposée sur la paroi externe annulaire de la roue d'entrée (11a), de sorte que la roue d'entrée (11a) est logée à l'intérieur de la roue de sortie (13a), chaque dent de la pluralité de troisièmes dents (130a) étant entourée et saillante depuis une périphérie interne de la roue de sortie (13a).
